# EUROPÄISCHE PATENTSCHRIFT

(11) **EP 0 737 543 B1**
(45) Veröffentlichungstag und Bekanntmachung des Hinweises auf die Patenterteilung: **19.06.2002**
(21) Anmeldenummer: 96105340.2
(22) Anmeldetag: 03.04.1996
(51) Int. Cl.: B23Q 7/14, B23P 21/00

(54) **Bearbeitungs- und/oder Montageanlage**
Machining and/or assembling center
Installation d'usinage et/ou de montage

(30) Priorität: 15.04.1995 DE 19514206
(43) Veröffentlichungstag der Anmeldung: 16.10.1996
(73) Patentinhaber: ADAM OPEL AG, 65423 Rüsselsheim (DE)
(72) Erfinder: Schneider, Manfred, Dipl.-Ing., 55218 Ingelheim am Rhein (DE); Thul, Hans, 66877 Ramstein (DE)
(74) Vertreter: Kümpfel, Heinz, Dipl.-Ing.

(56) Entgegenhaltungen:
- EP-A- 0 419 376
- EP-A- 0 491 448
- DE-A- 2 262 210
- DE-A- 3 540 316
- DE-A- 4 100 562
- DE-A- 4 244 351
- TECHNISCHE RUNDSCHAU TRANSFER, Bd. 86, Nr. 36, 9.September 1994, Seiten 32-34, XP002038122 SCHAEFER F: "TRANSFERMODULE BASIS VON MONTAGEANLAGEN ELEKTROMECHANISCHE GERAETE FLEXIBEL UND WIRTSCHAFTLICH MONTIEREN"
- PATENT ABSTRACTS OF JAPAN vol. 010, no. 171 (M-489), 17.Juni 1986 & JP 61 021869 A (MAZDA KK), 30.Januar 1986,
- PATENT ABSTRACTS OF JAPAN vol. 009, no. 080 (M-370), 10.April 1985 & JP 59 209974 A (DAIFUKU KIKO KK), 28.November 1984,

## Beschreibung

Die Erfindung betrifft eine Bearbeitungs- und/oder Montageanlage zur Fertigung komplexer Produkte in großen Stückzahlen, insbesondere Kraftfahrzeugkomponenten wie Motoren oder Getriebe, mit einem endlosen, vorzugsweise in horizontaler Ebene umlaufenden Hauptförderer und auf diesen aufsetzbaren Werkstückträgern und entlang des Hauptförderers angeordneten automatisierten Bearbeitungs- und/oder Montagemaschinen sowie Aggregaten zur Zu- und Abförderung der Werkstücke.

Mit DE 40 10 024 ist eine Fertigungsanlage für die Montage und/oder Bearbeitung von aus mehreren Einzelteilen bestehenden Bauteilen beschrieben, bei der die Einzelteile bzw. Bauteile auf Paletteneinsätzen angeordnet, gefügt oder bearbeitet werden, wobei die Paletteneinsätze auf Fahrwerken austauschbar angeordnet sind. Die Fahrwerke sind entlang einer Förderbahn einer Fördereinrichtung geführt, bei der die Förderbahn abschnittsweise parallel zu einem Hauptförderweg verlaufende Parallelförderwege aufweist, die über Querförderwege mit dem Hauptförderweg verbunden sind. Den Parallelförderwegen ist jeweils ein parallel zu diesen verlaufender Nebenförderweg unmittelbar benachbart zugeordnet, der über Knotenstationen mit dem Querförder- bzw. Parallelförderweg und dem Hauptförderweg verbunden ist.

Eine solche Anlage läßt zwar für die einzelnen Arbeitsbereiche ein relativ variables Arbeitsvolumen zu. Die Beschickung der einzelnen Arbeitsbereiche mit Material und die Zugänglichkeit der Arbeitsbereiche für Hilfsarbeiten, wie z. B. Wartungs- und Instandhaltungsarbeiten, ist jedoch durch das Nebeneinander mehrerer Förderwege stark erschwert.

In der Zeitschrift "Technische Rundschau" 86(1994) Nr. 36, Seiten 32 - 34, vom 9. September 1994, Bern, CH, ist mit dem Artikel "Transfermodule - Basis von Montageanlagen" eine Montageanlage beschrieben, bei welcher entlang eines Hauptförderers seitlich abzweigende Förderbänder angeordnet sind, an denen Handarbeitsplätze liegen. Es ist vorgeschlagen, die Arbeitsplätze zur besseren Kennung farbig zu kennzeichnen. Eine gruppenbildende Funktion durch diese Förderbänder wird jedoch nicht erreicht.

EP 0 419 376 A1 beschreibt eine Montageanlage, bei welcher zwei parallel zueinander laufende Förderer an einer Stelle eines ersten Förderers zusammenführen und von dieser Stelle aus lediglich eine Förderlinie besteht. Damit kann zwar eine Vormontage von zwei Komponenten erfolgen. Eine Montageorganisation von komplexen Arbeitsumfängen ist damit jedoch nicht möglich.

Mit EP 0 491 448 A1 ist eine Fertigungseinrichtung für aus Teilkomponenten zusammenfügbaren Funktionseinheiten beschrieben. Dabei sind zwei Fördereinrichtungen eingesetzt, wobei eine erste Fördereinrichtung zum Transport von Teilkomponenten im Teilebereitstellungsbereich und eine zweite Fördereinrichtung zum Transport der Teilkomponenten im Endmontagebereich vorgesehen sind.

Mit den im Endmontagebereich parallel verlaufenden zwei Fördereinrichtungen kann eine zeitlich variable Zuführung von Teilen zur Endmontage erreicht werden. Eine für komplexe Montagearbeiten vorteilhafte räumliche Gruppenbildung bei manuellen Arbeitsplätzen ist damit nicht möglich.

Der Erfindung liegt die Aufgabe zugrunde, eine Bearbeitungs- und/oder Montageanlage der eingangs genannten Art zu schaffen, bei welcher trotz gleichbleibender Geschwindigkeit des Hauptförderers die Arbeitsvolumina und damit die Arbeitszeiten, insbesondere von manuellen Arbeitsoperationen, variierbar und damit an veränderte Arbeitsaufgaben anpaßbar sind, insbesondere die manuellen Arbeitsoperationen in räumlich getrennte Einheiten auflösbar und zu räumlich abgrenzbaren Arbeitsgruppen zuordenbar sind, wobei in der jeweiligen Arbeitseinheit entstehende fehlerhafte Werkstücke nicht zwangsweise auf den Hauptförderer gelangen, sondern innerhalb der Arbeitseinheit verbleiben können, Werkstücke auf dem Hauptförderer ohne Zeitverzug im Verlauf der Anlage vorgegebene Arbeitsoperationen überspringen können und dabei alle Arbeitsstationen für die Zuführung von Material sowie für die Ausführung von Hilfsarbeiten gut zugänglich sind.

Erfindungsgemäß wird diese Aufgabe gelöst durch die Merkmale des Anspruches 1.

Die Unteransprüche haben vorteilhafte Weiterbildungen der Erfindung zum Gegenstand.

Der Hauptförderer verbindet somit jeweils an einem Punkt, der als Werkstückübergabevorrichtung ausgebildet ist, mehrere im allgemeinen unterschiedlich lange Satellitenförderer. Die auf dem Hauptförderer mittels Werkstückträgern aufgelegten Werkstücke werden vom Hauptförderer nacheinander an die an diesem Hauptförderer angeordneten automatisierten Bearbeitungs- und/oder Montagemaschinen und an die gleichfalls am Hauptförderer angeordneten Werkstückübergabevorrichtungen der Satellitenförderer gebracht. Es wird jedoch nur dann ein Werkstück von den Werkstückübergabevorrichtungen auf den Satellitenförderer übernommen, wenn dieses Werkstück im Verlauf dieses Satellitenförderers bearbeitet werden muß. Die Länge dieses Satellitenförderers kann entsprechend dem Arbeitsumfang der darauf auszuführenden Arbeit ausgeführt sein. Die Länge ist mit relativ wenig Aufwand veränderbar und so an sich verändernde Arbeitsumfänge anpaßbar. Der Satellitenförderer kann dabei stetig oder schrittweise, unabhängig von der Geschwindigkeit des Hauptförderers, arbeiten. Treten am Ende des Satellitenförderers fehlerhafte Werkstücke auf, dann können diese zur Behebung des Fehlers ein zweites Mal den Satellitenförderer durchlaufen, so daß auf den Hauptförderer nur fehlerfreie Werkstücke gelangen.

Die von den Satellitenförderern jeweils umschlossene Fläche bildet einen Raum für ein abgeschlossenes Arbeitsteam, welches durch den Satellitenförderer zwar mit der gesamten Anlage kommunizieren kann, jedoch vom Umfeld relativ abgeschirmt ist. Dadurch können die Arbeitsbedingungen für die Mitarbeiter des Teams verbessert werden.

Es kann vorteilhaft sein, anstelle eines verlängerten Satellitenförderers nebeneinander mehrere anzuordnen. Dies kann räumlich bedingt sein, aber auch zur deutlichen Trennung von Arbeitsoperationen und den dafür verantwortlichen Arbeitsteams geschehen.

Eine zum Hauptförderer strahlenförmige, d. h. zu einem Mittelpunkt gerichtete oder eine kammartige, d. h. senkrecht auf eine Linie gerichtete oder eine fischgrätenartige, d. h. in einem von 90° abweichenden Winkel auf eine gerade oder gekrümmte Linie gerichtete Hauptordnung der Satellitenbänder ermöglicht bei guter Raumökonomie der Anlage gute Zugänglichkeit für Material- und Hilfsstoffzuführung sowohl für den Hauptförderer als auch für die Satellitenförderer.

Mit der Anordnung von Materialaufnahmevorrichtungen nicht nur am Hauptförderer, sondern wahlweise auch an Satellitenförderern, können z. B. bei der Montage von Aggregaten auch an Satellitenförderern Teilaggregate und Einzelteile aufgenommen und verarbeitet werden.

Damit die auf dem Satellitenförderer ablaufenden Arbeitsoperationen, die im wesentlichen manuelle Operationen sind, in griffgünstiger Lage erfolgen können, ist die Höhe der Satellitenförderer auf eine für die jeweilige Arbeitsoperation ergonomisch richtige Höhe einstellbar. Die Werkstückübergabevorrichtung zwischen Hauptförderer und Satellitenförderer gleicht die Höhendifferenz aus.

Eine bevorzugte Form des Hauptförderers ist ein auf einer Ebene angeordneter umlaufender Kreisförderer, dessen Bewegungsbahn eine Fläche umschreibt. Innerhalb dieser Fläche sind vorteilhaft automatische Montage- und/oder Bearbeitungsstationen, aber auch die Einrichtungen zur Wartung und Instandhaltung der Anlage angeordnet. Außerhalb der vom Hauptförderer umfahrenen Fläche schließen sich die Satellitenförderer an, die damit von außen allseitig zugänglich sind.

Wenn die vom Hauptförderer umschlossene Fläche ein Oval mit zwei langen und zwei kurzen Seiten ist, dann können an den kurzen Seiten vorteilhaft Werkstückaufnahmeeinrichtungen angeordnet sein. Die Satellitenförderer schließen über die Werkstückübergabevorrichtungen an den langen Seiten des Hauptförderers an, wobei sie zueinander parallel angeordnet sind.

Wenn die vom Hauptförderer umschlossene Fläche ein ebener Kreis ist, sind die Satellitenförderer außerhalb des Kreises vorteilhaft strahlenförmig angeordnet, wobei der Berührungswinkel zwischen dem Hauptförderer und dem Satellitenförderer vorteilhaft jeweils gleich ist. Damit können die Werkstückübergabevorrichtungen an allen Satellitenförderern im wesentlichen bauteilgleich ausgeführt werden.

Die von den Satellitenförderern umgrenzten Flächen können beliebige Form aufweisen, vorzugsweise werden sie aber oval oder rund sein, da in einer solchen Konfiguration der Satellitenförderer relativ einfach ausgeführt sein kann.

Wenn auf der Anlage unterschiedliche oder modifizierte Werkstücke bearbeitet oder montiert werden, z. B. wenn Verbrennungsmotoren einmal mit einem Abgasturbolader und ein anderes Mal ohne einen solchen zu montieren sind, dann können solche Satellitenförderer und die an ihm angeordneten Arbeitsplätze, an denen die Modifikationen an den Aggregaten ausgeführt werden, vom Werkstück dadurch umgangen werden, daß sie die jeweilige Werkstückübergabevorrichtung auf dem Hauptförderer durchfahren. Die für die Modifikation spezialisierten Satellitenförderer werden damit ausschließlich von den Werkstücken durchlaufen, die dort auch bearbeitet werden. Andere Werkstücke können so den zugemessenen Arbeitsraum dort nicht verstellen.

Wenn eine zwischen dem Hauptförderer und einem Satellitenförderer angeordnete Werkstückübergabevorrichtung sowohl mit einer Werkstückabnahmestation als auch mit einer Werkstückabsetzstation ausgerüstet ist, dann kann gleichzeitig vom Hauptförderer ein Werkstück abgenommen und auf den Satellitenförderer übertragen werden sowie ein anderes Werkstück vom Satellitenförderer auf den Hauptförderer umgesetzt werden. Dies kann von Vorteil sein, wenn die vorhandenen Raumverhältnisse ein beliebiges Verlängern der Satellitenförderer nicht zulassen, da dadurch eine größere verfügbare Arbeitslänge vorhanden ist.

Wenn die Werkstückübergabevorrichtung mit einer Werkstückübergabestation, die welchselweise sowohl das Werkstück vom Hauptförderer abnimmt und auf den Satellitenförderer überträgt als auch vom Satellitenförderer abnimmt und auf den Hauptförderer überträgt, dann kann der Hauptförderer an dieser Stelle gegenüber der vorher beschriebenen Ausführung kürzer ausgebildet sein.

Es ist möglich, je nach Erfordernis, an einer Anlage beide Arten von Werkstückübergabevorrichtungen nebeneinander anzuwenden.

Wenn das für die Arbeitsoperationen an den Satellitenförderern erforderliche Material von den Außenseiten der vom Satellitenförderer umgrenzten Fläche her zu den Arbeitsplätzen hingereicht wird, dann kann der Arbeitsraum für das in der Fläche sich befindende Arbeitsteam freigehalten werden. Die Arbeitsbedingungen können so geschaffen werden, daß gute Voraussetzungen für hohe Qualität auch bei manuellen Arbeiten gegeben sind.

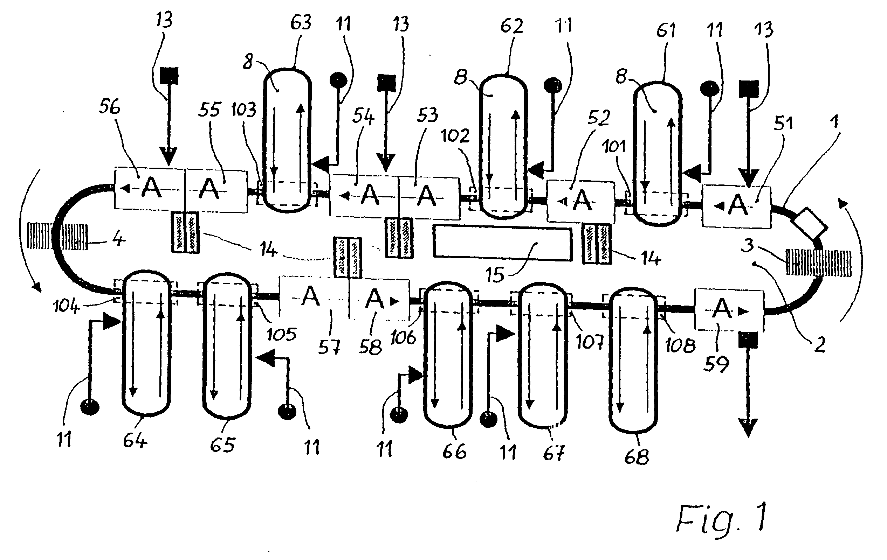

Ein Ausführungsbeispiel der Erfindung ist nachstehend anhand von Zeichnungen näher beschrieben. Es zeigen
- Fig. 1:: die schematisierte Draufsicht auf eine erfindungsgemäße Bearbeitungs- und/oder Montageanlage;

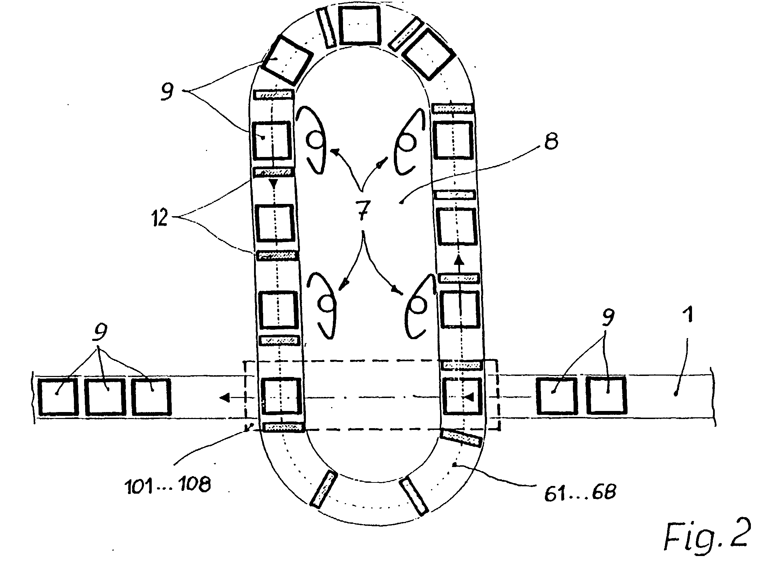

- Fig. 2:: ein Detail der Anlage nach Figur 1 in vergrößerter Darstellung, schematisiert.

Ein Hauptförderer 1 bildet auf einem ebenen Flur ein Oval und umschließt so eine Fläche 2. Diese Fläche 2 ist zugänglich über eine Treppe 3 und einen Tunnel 4. Der Hauptförderer 1 verbindet eine Reihe von automatischen Bearbeitungs- und/oder Montagemaschinen 51 bis 59 sowie eine Anzahl von Satellitenförderern 61 bis 68, an denen manuelle Arbeitsstationen 7 angeordnet sind. Die Satellitenförderer 61 bis 68 sind gleichfalls als auf ebenem Flur angeordnete Ovale ausgebildet, welche jeweils eine Fläche 8 umschließen. Der Hauptförderer 1 sowie die Satellitenförderer 61 bis 68 fördern Werkstückträger 9, die an der Montagemaschine 51 automatisch mit einer Grundausstattung von Material beschickt werden. Der Werkstückträger 9 mit dem von der Montagemaschine 51 geordnet aufgelegten, eventuell vorgefertigten und teilweise vormontierten Material wird vom Hauptförderer 1 zu einer ersten Werkstückübergabevorrichtung 101, welche den Satellitenförderer 61 mit dem Hauptförderer 1 verbindet, gefördert. Von der Werkstückübergabevorrichtung 101 wird entschieden, ob an den auf dem Werkstückträger 9 befindlichen Werkstücken solche Arbeitsoperationen erforderlich sind, die an Arbeitsstationen 7 des Satellitenförderers 61 durchgeführt werden. Diese Entscheidung kann durch eine an sich bekannte Codierung des Werkstückträgers 9 beim Aufliegen des Materials durch die Montagemaschine 51 ermöglicht werden. Ist eine Bearbeitung an den Arbeitsstationen 7 des Satellitenförderers 61 vorgesehen, dann wird der Werkstückträger 9 von einer Werkstückabnahmestation der Werkstückübergabevorrichtung 101 vom Hauptförderer 1 abgenommen, auf die jeweilige Arbeitshöhe des Satellitenförderers 61 gebracht und dort aufgesetzt. Der Satellitenförderer 61 bringt den Werkstückträger 9 zusammen mit dem aufliegenden Werkstück zu den aufeinanderfolgenden Arbeitsstationen 7, wobei der Satellitenförderer 61 je nach der Art dieser Arbeitsstationen 7 stetig oder schrittweise fördern kann. Dabei sind die Arbeitsplätze für die Arbeiter, welche die Arbeitsoperationen an den Arbeitsstationen 7 ausüben, innerhalb der Fläche 8 angeordnet, so daß ein räumlich abgeschlossener Arbeitsraum für das Arbeitsteam entsteht. Die für diese Arbeitsoperationen erforderlichen zusätzlichen Materialien und Hilfsstoffe werden durch eine Materialbeschickung 11 von außerhalb der Fläche 8 zugeführt und auf Materialträgern 12 abgelegt. Der Zugang zu den Flächen 8 kann über nicht dargestellte Treppen oder Tunnel oder ausschwenkbare Teile des Satellitenförderers erfolgen. Das Transportsystem der Satellitenförderer kann auch in einer solchen Höhe ausgeführt sein, daß es bequem überstiegen werden kann.

Sind die auf dem Satellitenförderer 61 vorgesehenen Arbeitsoperationen abgeschlossen, dann erreicht der jeweilige Werkstückträger 9 wieder die Werkstückübergabevorrichtung 101, wo er auf das Niveau des Hauptförderers 1 gebracht und von einer Werkstückabsetzstation wieder auf den Hauptförderer 1 umgesetzt wird. Der Hauptförderer 1 führt den Werkstückträger 9 mit dem angearbeiteten Werkstück der automatischen Bearbeitungs- und/oder Montagemaschine 52 zur weiteren Bearbeitung zu. Nach erfolgter automatischer Bearbeitung, welches natürlich auch eine Montageoperation sein kann, wird der Werkstückträger 9 nun der Werkstückübergabevorrichtung 102 zugeführt, bei der sich im allgemeinen der Vorgang zur Übernahme auf den Satellitenförderer 62 in gleicher Weise wiederholt, wie dies für den Satellitenförderer 61 beschrieben ist. Wird jedoch an der Werkstückübergabeeinrichtung 102 festgestellt, daß für das aktuell vorliegende Werkstück die Arbeitsoperationen der an dem Satellitenförderer 61 angeordneten Arbeitsstationen 7 nicht erforderlich sind, indem z. B. ein bestimmtes Aggregat an dieses Werkstück nicht angefügt werden soll, dann wird der Werkstückträger 9 von der Werkstückübergabeeinrichtung 102 direkt auf den Hauptförderer 1 weitergeleitet, wo er dann auf die nächste, hier automatisierte Bearbeitungs- bzw. Montagemaschine 53 trifft.

Die Bearbeitung bzw. Montage des Werkstückes, z. B. eines Verbrennungsmotors, setzt sich über die folgenden automatischen Bearbeitungs- und/oder Montagemaschinen 54 bis 59 sowie die Arbeitsstationen 7 innerhalb der Satellitenförderer 63 bis 68 fort. Dabei kann den automatischen Bearbeitungs- bzw. Montagemaschinen 51 bis 59 durch Materialbeschickungseinrichtungen 13 Material und Hilfsstoff zugeführt werden.

Innerhalb der vom Hauptförderer 1 umschlossenen Fläche 2 sind Schaltschränke 14 für die Steuerung der Anlage insgesamt sowie für die automatischen Bearbeitungs- und/oder Montagemaschinen 51 bis 59 untergebracht. Ebenso ist innerhalb der Fläche 2 ein Wartungs- und Instandhaltungszentrum 15 für die Anlage vorgesehen.

An der automatischen Montagemaschine 59 wird das fertig bearbeitete Werkstück, z. B. der fertig montierte Verbrennungsmotor, von dem Werkstückträger 8 abgenommen und aus der Anlage entnommen. Der Werkstückträger 8 läuft über den Hauptförderer 1 wieder bei der Bearbeitungs- und/oder Montagemaschine 51 in den Kreislauf der Anlage ein.

Die Erfindung ermöglicht eine Vielzahl von Ausführungsbeispielen. So kann die Anordnung von automatischen Bearbeitungs- bzw. Montagemaschinen und Satellitenförderern beliebig variiert werden. Der Hauptförderer und die Satellitenförderer können als Stetigförderer oder als Schrittförderer ausgelegt sein. Die Werkstückübergabevorrichtungen können, wie im weiter oben beschriebenen Ausführungsbeispiel dargelegt, mit jeweils einer Werkstückabnahmestation und einer Werkstückaufsetzstation versehen sein, so daß gleichzeitig ein Werkstück vom Hauptförderer abgenommen und ein anderes aufgesetzt wird. Sie können jedoch ebenso mit einer kombinierten Werkstückabnahme- und Aufsetzstation ausgerüstet sein, so daß nacheinander jeweils ein Werkstück vom Hauptförderer abgenommen und ein anderes aufgesetzt wird.

Es ist auch möglich, an einer Anlage einige Satellitenförderer mit einer Werkstückübergabevorrichtung mit jeweils getrennten Werkstückabnahme- und Werkstückaufsetzstationen und andere Satellitenförderer mit einer kombinierten Werkstückabnahme- und Aufsetzstation vorzusehen.

Die Anlage kann durch entsprechende Gestaltung der Innenflächen von Haupt- und Satellitenförderern gut an vorhandene Platzverhältnisse angepaßt werden. Der Hauptförderer kann auch so ausgeführt sein, daß lediglich eine Linie zugänglich ist, also keine Fläche von ihm umgrenzt ist und daß an dieser Linie die Satellitenförderer ein- oder beidseitig anschließen.

Der besondere Vorteil der Erfindung besteht darin, daß mit einer Bearbeitungs- und/oder Montageanlage mit festliegender Konfiguration unterschiedlich lange Arbeitswege und damit unterschiedliche Arbeitsvolumina nebeneinander realisiert werden können. Die Anlage läßt sich dabei sehr kompakt anordnen, so daß nur eine relativ geringe Grundfläche erforderlich ist. Trotzdem werden für die an einer solchen Anlage arbeitenden Menschen gute Arbeitsbedingungen mit deutlicher Gruppenbildung geschaffen. Die Einstellbarkeit der Arbeitshöhe an den Satellitenförderern ermöglicht optimale ergonomische Arbeitsbedingungen. Der Einsatz einer solchen Anlage ist durch variable Besetzung der Satellitenförderer mit Arbeitskräften einfach auf unterschiedliche Kapazitäten einzurichten, wobei dann trotzdem eine gleichmäßige Arbeitsbelastung für die Arbeitskräfte sichergestellt ist. In der Anlage können die von den Satellitenförderern abgedeckten Arbeitsoperationen wahlweise ausgelassen werden. Innerhalb jeder der Satellitenförderer können fehlerhafte Werkstücke zur Behebung des Fehlers ein zweites Mal umlaufen, so daß keine fehlerhaften Werkstücke auf den Hauptförderer gelangen.

## Patentansprüche

1. Bearbeitungs- und/oder Montageanlage zur Fertigung komplexer Produkte mit großen Stückzahlen, insbesondere Kraftfahrzeugkomponenten, mit einem endlosen, vorzugsweise in horizontaler Ebene umlaufenden Hauptförderer und aufsetzbaren Werkstückträgern und entlang desselben angeordneten automatisierten Bearbeitungs- und/oder Montagemaschinen sowie Aggregaten zur Zu- und Abförderung der Werkstücke, mit in den Verlauf des Hauptförderers (1) angeordneten weiteren, im wesentlichen gleichartigen und mit einstellbarer Geschwindigkeit stetig oder schrittweise umlaufenden Satellitenförderern (61 bis 68), denen Arbeitsstationen (7) für manuelle Bearbeitung der Werkstücke zugeordnet sind und zwischen dem Hauptförderer (1) und dem Satellitenförderer (61 bis 68) Werkstückübergabevorrichtungen (101 bis 108) vorgesehen sind, wobei die Satellitenförderer (61 bis 68) jeweils einzeln oder in Gruppen zwischen zwei am Hauptförderer (1) befindlichen automatisierten Bearbeitungs- und/oder Montagemaschinen (51 bis 59) angeordnet sind und die Bewegungsbahnen der Satellitenförderer (61 bis 68) jeweils eine einen Innenraum bildende Fläche (8) umschließen und mit einer Werkstückübergabevorrichtung (101 bis 108) an den Hauptförderer (1) tangieren und im Innenraum Arbeitsstationen (7) für die Mitarbeiter eines Teams angeordnet sind.

2. Bearbeitungs- und/oder Montageanlage nach Anspruch 1, **dadurch gekennzeichnet, daß** die Satellitenförderer (61 bis 68) zu dem Hauptförderer (1) strahlförmig, kammartig oder fischgrätenartig angeordnet sind.

3. Bearbeitungs- und/oder Montageanlage nach den Ansprüchen 1 oder 2, **dadurch gekennzeichnet, daß** ein oder mehrere Satellitenförderer (61 bis 68) zusätzliche Materialbeschickungen (11) für zur Komplettierung der Werkstücke benötigte Komponenten aufweisen.

4. Bearbeitungs- und/oder Montageanlage nach Anspruch 1 bis 3, **dadurch gekennzeichnet, daß** die Arbeitshöhe der Satellitenförderer (61 bis 68) gegenüber dem Hauptförderer (1) höhenverstellbar ausgebildet ist, wobei die dem jeweiligen Satellitenförderer (61 bis 68) zugeordnete Werkstückübergabevorrichtung (101 bis 108) die Höhendifferenz zum Hauptförderer (1) ausgleicht.

5. Bearbeitungs- und/oder Montageanlage nach einem oder mehreren der Ansprüche 1 bis 4, **dadurch gekennzeichnet, daß** die Bewegungsbahn des Hauptförderers (1) eine im wesentlichen horizontal angeordnete Fläche (2) umschreibt, an dessen Außenseiten sich die Satellitenförderer (61 bis 68) erstrecken.

6. Bearbeitungs- und/oder Montageanlage nach Anspruch 5, **dadurch gekennzeichnet, daß** die Bewegungsbahn des Hauptförderers (1) ein einen Innenraum umgrenzendes Oval ist und die Satellitenförderer (61 bis 68) sich im Bereich der langen Seiten des Ovals nach außen erstrecken.

7. Bearbeitungs- und/oder Montageanlage nach Anspruch 5, **dadurch gekennzeichnet, daß** die Bewegungsbahn des Hauptförderers (1) ein einen Innenraum umschließender Kreis ist und die Satellitenförderer (61 bis 68) sich strahlenförmig vom Kreisumfang aus nach außen erstrecken.

8. Bearbeitungs- und/oder Montageanlage nach einem der Ansprüche 5 bis 7, **dadurch gekennzeichnet, daß** im vom Hauptförderer (1) umschlossenen Innenraum Schaltschränke (14) und Hilfsaggregate für am Hauptförderer (1) angeordnete automatisierte Bearbeitungs- und/oder Montagemaschinen (51 bis 59) angeordnet sind.

9. Bearbeitungs- und/oder Montageanlage nach einem oder mehreren der Ansprüche 1 bis 8, **dadurch gekennzeichnet, daß** die den Innenraum der Satellitenförderer (61 bis 68) bildende Fläche (8) oval oder kreisförmig ist.

10. Bearbeitungs- und/oder Montageanlage nach Anspruch 8 und 9, **dadurch gekennzeichnet, daß** sich in den von den Bewegungsbahnen der Satellitenförderer (61 bis 68) umschlossenen Flächen (8) Arbeitsstationen (7) für manuelle Bearbeitung der Werkstücke befinden.

11. Bearbeitungs- und/oder Montageanlage nach einem oder mehreren der Ansprüche 1 bis 10, **dadurch gekennzeichnet, daß** die Werkstückübergabevorrichtungen (101 bis 108) von auf dem Hauptförderer (1) befindlichen Werkstückträgern (9) sowie von auf dem zugehörigen Satellitenförderern (61 bis 68) befindlichen Werkstückträgern (9) durchfahrbar sind.

12. Bearbeitungs- und/oder Montageanlage nach einem oder mehreren der Ansprüche 1 bis 11, **dadurch gekennzeichnet, daß** eine oder mehrere der Werkstückübergabevorrichtungen (101 bis 108) mit jeweils einer Werkstückübergabestation ausgerüstet sind, welche entweder jeweils einen Werkstückträger (9) vom Hauptförderer (1) abnimmt und auf den jeweiligen Satellitenförderer (61 bis 68) überträgt oder jeweils einen Werkstückträger (9) vom jeweiligen Satellitenförderer (61 bis 68) abnimmt und auf den Hauptförderer (1) überträgt.

13. Bearbeitungs- und/oder Montageanlage nach einem oder mehreren der Ansprüche 1 bis 11, **dadurch gekennzeichnet, daß** eine oder mehrere der Werkstückübergabevorrichtungen (101 bis 108) sowohl mit einer Werkstückabnahmestation zum Abnehmen von Werkstückträgern vom Hauptförderer (1) und Übernehmen auf den Satellitenförderer (61 bis 68) als auch mit einer Werkstückabsetzstation zum Absetzen von Werkstückträgern (9) vom Satellitenförderer (61 bis 68) auf den Hauptförderer (1) ausgerüstet sind, so daß gleichzeitig ein Werkstückträger (9) vom Hauptförderer (1) zum Satellitenförderer (61 bis 68) aufgenommen und ein anderer Werkstückträger (9) vom Satellitenförderer (61 bis 68) auf den Hauptförderer (1) abgelegt werden können.

14. Bearbeitungs- und/oder Montageanlage nach Anspruch 1 bis 13, **dadurch gekennzeichnet, daß** die Materialbeschickung (11) an den Satellitenförderern (61 bis 68) das Material von den Außenseiten der vom Satellitenförderer (61 bis 68) umgrenzten Flächen (8) zum Satellitenförderer (61 bis 68) hin liefern.

## Claims

1. Treatment and/or assembly plant for the production of complex products in large numbers, in particular motor vehicle components, with an endless main conveyor preferably rotating in a horizontal plane and work piece carriers which can be placed thereon and automated treatment and/or assembly machines arranged along same as well as units for supply and removal of the work pieces, with additional satellite conveyors (61 to 68) which are arranged in the path of the main conveyor (1) and are essentially identical and rotate steadily or stepwise at a variable speed and with which are associated work stations (7) for manual treatment of the work pieces, and between the main conveyor (1) and the satellite conveyor (61 to 68) are provided work piece transfer devices (101 to 108), wherein the satellite conveyors (61 to 68) are in each case arranged individually or in groups between two automated treatment and/or assembly machines (51 to 59) located on the main conveyor (1), and the paths of movement of the satellite conveyors (61 to 68) in each case enclose an area (8) forming an inner space and are tangent to the main conveyor (1) with a work piece transfer device (101 to 108), and in the inner space are arranged work stations (7) for the members of a team.

2. Treatment and/or assembly plant according to claim 1, **characterised in that** the satellite conveyors (61 to 68) are arranged in the form of rays or after the fashion of a comb or a herringbone relative to the main conveyor (1).

3. Treatment and/or assembly plant according to claim 1 or 2, **characterised in that** one or more satellite conveyors (61 to 68) comprise additional material supply means (11) for components needed for completion of the work pieces.

4. Treatment and/or assembly plant according to claims 1 to 3, **characterised in that** the working height of the satellite conveyors (61 to 68) is adjustable vertically relative to the main conveyor (1), wherein the work piece transfer device (101 to 108) associated with the respective satellite conveyor (61 to 68) compensates for the difference in height relative to the main conveyor (1).

5. Treatment and/or assembly plant according to one or more of claims 1 to 4, **characterised in that** the path of movement of the main conveyor (1) circumscribes an essentially horizontally arranged area (2) on the outsides of which extend the satellite conveyors (61 to 68).

6. Treatment and/or assembly plant according to claim 5, **characterised in that** the path of movement of the main conveyor (1) is an oval bounding an inner space, and the satellite conveyors (61 to 68) extend outwards in the region of the long sides of the oval.

7. Treatment and/or assembly plant according to claim 5, **characterised in that** the path of movement of the main conveyor (1) is a circle enclosing an inner space, and the satellite conveyors (61 to 68) extend outwards from the circle circumference in the form of rays.

8. Treatment and/or assembly plant according to any of claims 5 to 7, **characterised in that** in the inner space enclosed by the main conveyor (1) are arranged switch cabinets (14) and auxiliary units for automated treatment and/or assembly machines (51 to 59) arranged on the main conveyor (1).

9. Treatment and/or assembly plant according to one or more of claims 1 to 8, **characterised in that** the area (8) forming the inner space of the satellite conveyors (61 to 68) is oval or circular.

10. Treatment and/or assembly plant according to claims 8 and 9, **characterised in that** in the areas (8) enclosed by the paths of movement of the satellite conveyors (61 to 68) are located work stations (7) for manual treatment of the work pieces.

11. Treatment and/or assembly plant according to one or more of claims 1 to 10, **characterised in that** the work piece transfer devices (101 to 108) can be traversed by work piece carriers (9) located on the main conveyor (1) as well as by work piece carriers (9) located on the associated satellite conveyors (61 to 68).

12. Treatment and/or assembly plant according to one or more of claims 1 to 11, **characterised in that** one or more of the work piece transfer devices (101 to 108) are each equipped with a work piece transfer station which either in each case takes a work piece carrier (9) off the main conveyor (1) and transfers it to the respective satellite conveyor (61 to 68) or in each case takes a work piece carrier (9) off the respective satellite conveyor (61 to 68) and transfers it to the main conveyor (1).

13. Treatment and/or assembly plant according to one or more of claims 1 to 11, **characterised in that** one or more of the work piece transfer devices (101 to 108) are equipped both with a work piece take-off station for taking work piece carriers off the main conveyor (1) and transferring them to the satellite conveyor (61 to 68) and with a work piece depositing station for depositing work piece carriers (9) from the satellite conveyor (61 to 68) on the main conveyor (1), so that at the same time a work piece carrier (9) can be picked up from the main conveyor (1) to the satellite conveyor (61 to 68) and another work piece carrier (9) can be laid down from the satellite conveyor (61 to 68) on the main conveyor (1).

14. Treatment and/or assembly plant according to claims 1 to 13, **characterised in that** the material supply means (11) on the satellite conveyors (61 to 68) deliver the material from the outsides of the areas (8) bounded by the satellite conveyor (61 to 68), to the satellite conveyor (61 to 68).

## Revendications

1. Installation d'usinage et/ou de montage pour la fabrication en grand nombre de produits complexes, en particulier de composants de véhicules automobiles, avec un transporteur sans fin qui se déplace de préférence dans un plan horizontal, des supports de pièces pouvant être placés sur le transporteur et des machines d'usinage et/ou de montage automatisées disposées le long du transporteur ainsi que des dispositifs auxiliaires pour amener et évacuer les pièces, avec sur le parcours du transporteur principal (1), des transporteurs satellites (61 à 68) supplémentaires essentiellement identiques qui se déplacent en continu ou pas à pas, avec une vitesse réglable, et auxquels sont associés des postes de travail (7) pour un usinage manuel des pièces, des dispositifs de transfert de pièces (101 à 108) étant prévus entre le transporteur principal (1) et le transporteur satellite (61 à 68), les transporteurs satellites (61 à 68) étant disposés de manière isolée ou en groupes entre deux machines d'usinage et/ou de montage (51 à 59) automatisées prévues le long du transporteur principal (1), les trajectoires de déplacement des transporteurs satellites (61 à 68) bordant chaque fois une surface (8) qui forme un espace intérieur et tangentant le transporteur principal (1) avec un dispositif de transfert de pièce (101 à 108), et des postes de travail (7) pour les membres d'une équipe de travail étant aménagés dans l'espace intérieur.

2. Installation d'usinage et/ou de montage selon la revendication 1, **caractérisée en ce que** les transporteurs satellites (61 à 68) sont disposés en forme de rayons, de peigne ou d'arête de poisson par rapport au transporteur principal (1).

3. Installation d'usinage et/ou de montage selon la revendication 1 ou 2, **caractérisée en ce qu'**un ou plusieurs transporteurs satellites (61 à 68) comportent des moyens d'alimentation (11) supplémentaires pour des composants nécessaires pour l'assemblage des pièces.

4. Installation d'usinage et/ou de montage selon les revendications 1 à 3, **caractérisée en ce que** la hauteur de travail des transporteurs satellites (61 à 68) par rapport au transporteur principal (1) est réglable, le dispositif de transfert de pièce (101 à 108) associé au transporteur satellite (61 à 68) concerné compensant la différence de hauteur.

5. Installation d'usinage et/ou de montage selon une ou plusieurs des revendications 1 à 4, **caractérisée en ce que** la trajectoire de déplacement du transporteur principal (1) délimite une surface (2) essentiellement horizontale, sur les côtés extérieurs de laquelle s'étendent les transporteurs satellites (61 à 68).

6. Installation d'usinage et/ou de montage selon la revendication 5, **caractérisée en ce que** la trajectoire de déplacement du transporteur principal (1) est un ovale, qui délimite un espace intérieur, et **en ce que** les transporteurs satellites (61 à 68) s'étendent en direction de l'extérieur dans la région des grands côtés de l'ovale.

7. Installation d'usinage et/ou de montage selon la revendication 5, **caractérisée en ce que** la trajectoire de déplacement du transporteur principal (1) est un cercle, qui délimite un espace intérieur, et **en ce que** les transporteurs satellites (61 à 68) s'étendent en direction de l'extérieur en forme de rayons sur le pourtour du cercle.

8. Installation d'usinage et/ou de montage selon une des revendications 5 à 7, **caractérisée en ce que** dans l'espace intérieur défini par le transporteur principal (1) sont disposés des armoires de commande (14) et des éléments auxiliaires pour des machines d'usinage et/ou de montage (51 à 59) automatisées disposées le long du transporteur principal (1).

9. Installation d'usinage et/ou de montage selon une ou plusieurs des revendications 1 à 8, **caractérisée en ce que** la surface (8) qui forme l'espace intérieur des transporteurs satellites (61 à 68) est ovale ou circulaire.

10. Installation d'usinage et/ou de montage selon les revendications 8 et 9, **caractérisée en ce qu'**à l'intérieur des surfaces définies par les trajectoires de déplacement des transporteurs satellites (61 à 68) sont disposés des postes de travail (7) pour l'usinage manuel des pièces

11. Installation d'usinage et/ou de montage selon une ou plusieurs des revendications 1 à 10, **caractérisée en ce que** les dispositifs de transfert de pièces (101 à 108) peuvent être traversés par des supports de pièce (9) se trouvant sur le transporteur principal (1) ainsi que par des supports de pièce (9) se trouvant sur le transporteur satellite (61 à 68) associé.

12. Installation d'usinage et/ou de montage selon une ou plusieurs des revendications 1 à 11, **caractérisée en ce qu'**un ou plusieurs des dispositifs de transfert de pièces (101 à 108) est équipé d'une station de transfert qui, selon le cas, enlève un support de pièce (9) du transporteur principal (1) et le transfère sur le transporteur satellite (61 à 68) concerné, ou enlève un support de pièce (9) du transporteur satellite (61 à 68) et le transfère sur le transporteur principal (1).

13. Installation d'usinage et/ou de montage selon une ou plusieurs des revendications 1 à 11, **caractérisée en ce qu'**un ou plusieurs des dispositifs de transfert de pièces (101 à 108) est équipé à la fois d'une station de prélèvement, pour prélever des supports de pièces sur le transporteur principal (1) et les transférer sur le transporteur satellite (61 à 68), et d'une station de déchargement, pour décharger des supports de pièces du transporteur satellite (61 à 68) sur le transporteur principal (1), de telle sorte que simultanément un support de pièce (9) peut être transféré du transporteur principal (1) vers le transporteur satellite (61 à 68) et un autre support de pièce (9) peut être déposé du transporteur satellite (61 à 68) sur le transporteur principal (1).

14. Installation d'usinage et/ou de montage selon les revendications 1 à 13, **caractérisée en ce que** le dispositif d'alimentation en produits (11) des transporteurs satellites (61 à 68) délivre les produits au transporteur satellite (61 à 68) concerné à partir de surfaces (8) bordées par les côtés extérieurs du transporteur satellite (61 à 68).
